# EUROPÄISCHE PATENTSCHRIFT

(11) **EP 3 412 127 B1**
(45) Veröffentlichungstag und Bekanntmachung des Hinweises auf die Patenterteilung: **12.08.2020**
(21) Anmeldenummer: 18401046.0
(22) Anmeldetag: 17.05.2018
(51) Int. Cl.: A01C 17/00

(54) **VERFAHREN ZUM AUSBRINGEN VON VERTEILGUT AUF EINER LANDWIRTSCHAFTLICHEN FLÄCHE UND LANDWIRTSCHAFTLICHE VERTEILMASCHINE**
METHOD FOR THE APPLICATION OF DISTRIBUTED MATERIAL ON AN AGRICULTURAL AREA AND AGRICULTURAL DISTRIBUTOR
PROCÉDÉ D'ÉPANDAGE DE MATÉRIAU À ÉPANDRE SUR UNE SURFACE AGRICOLE ET MACHINE D'ÉPANDAGE AGRICOLE

(30) Priorität: 06.06.2017 DE 102017112412
(43) Veröffentlichungstag der Anmeldung: 12.12.2018
(73) Patentinhaber: Amazonen-Werke H. Dreyer GmbH & Co. KG, 49205 Hasbergen (DE)
(72) Erfinder: Konermann, Thomas, 49477 Ibbenbüren (DE)

(56) Entgegenhaltungen:
- EP-A1- 0 761 084
- DE-A1- 19 513 423
- DE-A1- 19 741 653
- DE-A1- 19 749 099
- US-B1- 6 216 614

## Beschreibung

Die Erfindung betrifft ein Verfahren zum Ausbringen eines Verteilguts auf einer landwirtschaftlichen Fläche gemäß dem Oberbegriff des Anspruchs 1. Des Weiteren betrifft die Erfindung einen Schleuderstreuer zum Ausbringen eines Verteilguts auf einer landwirtschaftlichen Fläche gemäß dem Oberbegriff des Anspruchs 9.

Die gezielte Ausbringung von Verteilgut, wie insbesondere Dünger, auf einer landwirtschaftlichen Fläche ist aus verschiedenen Gründen, aber insbesondere zur Verbesserung des Ertrags unerlässlich. Das Verteilgut wird dazu mittels einer landwirtschaftlichen Verteilmaschine ausgebracht. Vielfach handelt es sich auch um festes, körniges oder flüssiges Verteilgut, das dann mittels eines sogenannten Schleuderstreuers ausgebracht werden kann. Dünger kann aber beispielsweise auch während des Aussäens mittels einer Sämaschine ausgebracht werden.

Aus der DE 10 2014 106 050 A1 geht ein Schleuderstreuer hervor, bei dem eine Speicherung der insgesamt auf der zu bearbeitenden Fläche ausgebrachten Menge an Verteilgut erfolgt. Damit kann die auf der bearbeiteten Fläche ausgebrachte Düngermenge überwacht werden, beispielsweise um falsche Dosierungen zu vermeiden.

DE 197 49 099 A1 offenbart ein Verfahren nach dem Oberbegriff des Anspruchs 1 zum Einsatz einer landwirtschaftlichen Ausbringmaschine. Die ausgebrachte Verteilgutmenge wird aufgezeichnet. Diese Aufzeichnungen werden derart verarbeitet, dass sie bei einem späteren Ausbringvorgang berücksichtigt werden.

Die US 6 216 614 B1 befasst sich mit einem Ausbringverfahren zum Betrieb einer Verteilmaschine, die ein Gestänge mit mehreren Ausbringpunkten aufweist. Die ausgebrachte Menge kann georeferenziert erfasst werden. Die Position der Ausbringpunkte wird beim Ausbringvorgang überwacht, sodass festgestellt werden kann, ob sie einen bereits behandelten Bereich überstreichen. Ist dies der Fall, ist feststellbar, ob und in welchem Umfang eine weitere Behandlung des Bereichs erforderlich ist.

Moderne Verteilmaschinen sind aber darüber hinausgehend in der Lage, das Ausbringen des Verteilguts teilfächenspezifisch zu steuern. Damit wird eine Anpassung der Verteilgutmengen an die lokale Bodenbeschaffenheit erreicht. Die basiert dabei auf separat ermittelten Daten zur Bodenbeschaffenheit, beispielsweise aus Bodenanalysen, Ertragsermittlungen und ähnlichem.

Um die richtige Dosierung von Nährstoffen, insbesondere durch Düngergaben, ermitteln und ausbringen zu können, ist es erforderlich, den aktuellen Stand teilflächenspezifisch zu kennen, um davon ausgehend die erforderlichen Nährstoffmengen berechnen zu können. Bei der Ausbringung wird die bearbeitete Fläche und die momentane Ausbringmenge erfasst und protokolliert. Das Erfassen der Ausbringmenge wird durch einen sogenannten Task-Controller auf einem Terminal und/oder Jobrechner durchgeführt. Dies kann auch pro Teilbreite und ortsaufgelöst erfolgen.

Bei der Bearbeitung einer landwirtschaftlichen Fläche mit einem Schleuderstreuer wird die Fläche bei der Arbeit derart bestreut, dass die Streufächer bei benachbarten Überfahrten mit einem Schleuderstreuer einander überlappen. Der Grund hierfür ist, dass die Ausbringmenge direkt hinter dem Schleuderstreuer maximal ist und zu den Seiten hin abnimmt. Um eine gleichmäßige Verteilung zu erreichen, erstreckt sich der Streufächer daher bei der Überfahrt jeweils typischerweise bis zur benachbarten Fahrspur, so dass eine gleichmäßige Ausbringmenge pro Fläche gewährleistet ist. Schwankungen der Ausbringmenge, beispielsweise verursacht durch Fahrfehler oder sonstige Umstände werden hierbei üblicherweise nicht berücksichtigt, so dass trotz zweifacher Bearbeitung eines jeweiligen Flächenstücks bei unvorhergesehenen Schwankungen die Ausbringmenge nicht dem vorhergesehen Sollwert entspricht.

Derartige Schwankungen oder Ausbringfehler treten häufig beim Übergang zwischen Feldinnerem und Vorgewende auf. Das Vorgewende ist hierbei der Teil des Feldes in dem an den Stirnseiten zwischen zwei in gegensinniger Weise befahrenen Fahrspuren gewendet wird. Dieser Teil der Fläche wird häufig zuletzt bearbeitet. Für die korrekte Bearbeitung der landwirtschaftlichen Fläche muss beim Übergang zwischen Feldinnerem und Vorgewende oftmals sehr lange geradeaus gefahren werden, da sich der Streufächer heutiger Schleuderstreuer sehr weit nach hinten erstreckt. Aus Unachtsamkeit des Anwenders oder weil er wegen der angelegten Fahrspuren dazu gezwungen wird, ist häufig ein zu frühes Abbiegen des Anwenders in eine Vorgewendefahrspur im Rahmen des Wendevorganges zu beobachten. Hierdurch ergibt sich eine ungleichmäßige Verteilung bzw. eine Abweichung von der ursprünglich geplanten Sollapplikation des Düngers.

Derartige Schwankungen können auch witterungsbedingt, beispielsweise durch Windeinfluss, insbesondere bei Schleuderstreuern und Feldspritzen, hervorgerufen werden. Um Witterungseinflüsse zu berücksichtigen, ist die Verteilmaschine mit einer entsprechenden Messvorrichtung, insbesondere einem Windmesser ausgestattet oder über eine Datenverbindung, insbesondere eine Internetverbindung mit einer lokalen Wetterstation verbunden.

Es ist daher eine Aufgabe der Erfindung, die genannten Nachteile zu beseitigen. Insbesondere soll erreicht werden, den Ertrag landwirtschaftlicher Flächen teilflächenspezifisch zu erhöhen. Dazu soll die Ausbringmenge möglichst exakt an die gewünschten Sollwerte angepasst werden.

Diese Aufgabe wird gelöst durch ein Verfahren mit den Maßnahmen des Anspruchs 1. Das Verfahren dient zum Ausbringen von Verteilgut auf einer landwirtschaftlichen Fläche mittels eines Schleuderstreuers. Dabei weist der Schleuderstreuer wenigstens eine Ausbringvorrichtung auf. Die durch die wenigstens eine Ausbringvorrichtung abgedeckte Ausbringbreite wird in mehrere Teilbreiten unterteilt und die Ausbringmenge des Verteilguts wird für jede Teilbreite des Schleuderstreuers eingestellt. Vorzugsweise erfolgt diese Einstellung jeweils separat, also unabhängig von anderen Teilbreiten. Das Verfahren zeichnet sich weiter dadurch aus, dass die von Schleuderstreuer ausgebrachte Menge an Verteilgut teilbreitenweise erfasst wird. Damit kann die lokale Bodenbeschaffenheit durch die Daten des aktuellen Ausbringvorgangs ergänzt beziehungsweise entsprechend fortgeschrieben werden. Erfindungsgemäß ist vorgesehen, dass bei wiederholtem Ausbringen eines Verteilguts auf der Fläche zur Düngung der Fläche mit teilweiser Überlappung der Streubereiche benachbarter Fahrspuren, die vorab erfassten Messwerte der Ausbringmenge bei der Düngung im Überlappungsbereich zumindest teilweise teilbreitenweise berücksichtigt werden. Damit wird erreicht, dass die ausgebrachte Menge an Verteilgut an die Bodenbeschaffenheit optimal angepasst werden kann. Gegebenenfalls kann das Ausbringen auch mit zeitlichem Abstand erfolgen. Es kann hierdurch insbesondere erreicht werden, dass bei der Bearbeitung einer landwirtschaftlichen Fläche mit einem Schleuderstreuer Abweichungen von der vorgesehenen Arbeitscharakteristik in einem Arbeitsgang kompensiert werden. Derartige Abweichungen, können auftreten durch Fahr- und/oder Bedienfehler des Benutzers, äußere Einflüsse, insbesondere Wind, die Beschaffenheit der landwirtschaftlichen Fläche, wie Neigung oder Anpassung von Fahrtrouten aufgrund von Hindernissen. Auch können unvorhersehbare Funktionsstörungen der landwirtschaftlichen Maschine zu einer derartigen Abweichung der Arbeitscharakteristik des Schleuderstreuers führen. Wie bereits erwähnt können Abweichungen von der vorhergesehen Arbeitsweise auch insbesondere beim Übergang zwischen Feldinnerem und Vorgewende auftreten, wenn zu früh von der vorgesehenen Fahrspur abgebogen wird.

Auch bei einer Feldspritze ist ein ähnliches Verfahren anwendbar. Beispielsweise kann durch Windeinfluss, insbesondere Windböen, ein Verwehen des Spritzfächers in Richtung benachbarter, später zu bearbeitender Fahrspuren erfolgen. Hierdurch wird gewissermaßen mit der Feldspritze eine Teilfläche mehrfach bearbeitet, auch wenn dies eigentlich nicht vorgesehen ist. Nun kann diese verwehte Spritzmittelmenge berücksichtigt werden, einerseits indem das zuerst bearbeitet und durch das Verwehen mit zu wenig Spritzmittel beaufschlagte Flächenstück erneut bearbeitet wird und/oder indem die Spritzmittelmenge, welche auf ein anderes Flächenstück geweht wurde bei der Bearbeitung dieses Flächenstücks berücksichtigt wird und entsprechend die Ausbringmenge reduziert wird. Ebenfalls können durch Kurvenfahrten erhebliche Abweichungen von einer vorbestimmten Ausbringmenge auftreten. Aufgrund der heutigen Gestängebreiten von Feldspritzen von bis zu 50 m führt bereits eine moderate Kurvenfahrt zu erheblich höheren Geschwindigkeiten im Kurvenäußeren und niedrigeren Geschwindigkeiten im Kurveninneren. Auch hierdurch bedingte Fehlapplikationen können im Rahmen eines zweiten Bearbeitungsvorganges zumindest teilweise, nämlich in den Bereichen, wo zu wenig ausgebracht wurde, kompensiert werden.

Vorzugsweise wird die ausgebrachte Menge an Verteilgut positionsabhängig und/oder zeitabhängig erfasst. Damit wird erreicht, dass die lokal ausgebrachten Mengen berücksichtigt werden. Die positionsabhängige Erfassung kann beispielsweise direkt über Positionsmessungen erfolgen, insbesondere durch Ortungsverfahren, wie GPS oder ähnliches. Aufgrund einer zeitabhängigen Erfassung können ebenfalls Rückschlüsse auf die aktuelle Position gezogen werden. Außerdem lassen sich dann nachträglich noch eventuelle Wechselwirkungen mit anderen Messgrößen, wie Niederschlag, Sonneneinstrahlung etc., ermitteln. Idealerweise werden sowohl Position als auch Zeit erfasst.

Die tatsächliche Ausbringmenge wird bevorzugt anhand der eingestellten Ausbringmenge ermittelt und/oder gemessen. Vorzugsweise erfolgt der Rückschluss auf die tatsächliche Ausbringmenge anhand von Parametern der Verteilmaschine. Sie kann aber auch mittels wenigstens eines Sensors, insbesondere Durchflussmesser, Drehmomentsensor, Wiegevorrichtung und/oder Radarsensors, zur Messung der Ausbringmenge ermittelt werden.

Die Ermittlung und/oder Messung der Ausbringmenge erfolgt weiter bevorzugt teilbreitenweise. Einer Unterteilung der Ausbringbreite der Verteilmaschine in mehrere Teilbreiten wird damit Rechnung getragen. Es ist also vorgesehen, die Ausbringmenge für jede Teilbreite zu ermitteln. Dies kann bei einem Schleuderstreuer beispielsweise mittels einer Sensoranordnung von Radarsensoren erfolgen, die die Breite des Streufächers zumindest annähernd vollständig erfassen. Bei einer Feldspritze kann der Schaltzustand einzelner Düsen oder Teilbreiten erfasst oder eine Druck- und/oder Durchflussmessung teilbreiten- und/oder düsenweise erfolgen.

Es wird vorzugsweise die eingestellte und/oder tatsächliche Ausbringmenge gespeichert. Diese Speicherung erfolgt vorzugsweise teilbreitenweise. Auf diese Weise kann bei der nachfolgenden Bearbeitung desselben Flächenstücks insbesondere während desselben Arbeitsvorganges eine Anpassung an die zuvor ausgebrachte Menge erfolgen.

Die Speicherung der Ausbringmenge erfolgt vorzugsweise in einem Terminal zur Steuerung der landwirtschaftlichen Verteilmaschine oder alternativ an der Verteilmaschine selbst, beispielsweise in einem Jobrechner oder ähnlichen Datenverarbeitungsvorrichtung. Alternativ oder auch zusätzlich kann sie unabhängig von der Verteilmaschine erfolgen. Vorzugsweise ist dazu dann ein externer beziehungsweise zentraler Speicher für die Daten vorgesehen, also ein Datenspeicher. Damit kann einerseits die Speicherung der Daten erreicht werden. Andererseits kann auch ein zentraler Datenbestand aktualisiert werden. Die Daten können insbesondere auch auf einem Tablet gespeichert und/oder weiterverarbeitet werden. Gegebenenfalls kann die Speicherung auch zweistufig erfolgen. Zunächst werden die Daten an oder mittels der Verteilmaschine erfasst und gespeichert, vorzugsweise zwischengespeichert. Anschließend oder zu einem späteren Zeitpunkt können dann die Daten an den externen Speicher überführt werden. Beispielsweise kann dies über ein Netzwerk oder auch durch Transport mittels eines Datenspeichers erfolgen.

Vorzugsweise werden ortsabhängig erfasste Ausbringmengen des Verteilguts gespeichert. Diese werden weiter vorzugsweise als Ortsdaten erfasst, insbesondere in einer Ortskarte. Damit kann eine unmittelbar ortsbezogene Speicherung erfolgen. Auch wird eine auf anschauliche Weise menschenlesbare Kartendarstellung ermöglicht.

Bei wiederholtem Ausbringen eines Verteilguts auf der Fläche, beispielsweise zur Düngung, können die vorab erfassten Messwerte der Ausbringmenge zumindest teilweise berücksichtigt werden. Damit wird erreicht, dass bei aufeinander folgenden Ausbringvorgängen jeweils die vorangegangenen Schleuderstreuer Ausbringvorgänge berücksichtigt werden können, um die ausgebrachte Menge an Verteilgut an die geplante Sollmenge anzupassen. Gegebenenfalls kann das Ausbringen auch mit zeitlichem Abstand erfolgen.

Insbesondere die teilbreitenweise erfasste Ausbringmenge wird berücksichtigt. Vorzugsweise betrifft dies zumindest diejenige Ausbringmenge eines vorherigen Ausbringvorgangs, weiter vorzugsweise des unmittelbar vorangegangenen Ausbringvorgangs. Damit kann der direkte beziehungsweise zeitnächste Einflussfaktor auf die Bodenbeschaffenheit berücksichtigt werden.

Es ist erfindungsgemäß vorgesehen, dass bei einer Düngung einer Fläche mit teilweiser Überlappung der Streubereiche benachbarter Fahrspuren die vorab erfassten Messwerte der Ausbringmenge bei der Düngung im Überlappungsbereich zumindest teilweise teilbreitenweise berücksichtigt werden. Auf diese Weise kann beispielsweise bei variierenden Sollapplikationsmengen einer Applikationskarte oder unregelmäßig geformten Flächen die gewünschte Ausbringmenge optimal eingestellt werden, da bei zweifacher Bearbeitung desselben Flächenbereichs mittels überlappender Bearbeitung bei der zweiten Bearbeitung der zuvor durchgeführte Bearbeitungsvorgang berücksichtigt wird. Bei einem Schleuderstreuer ist dies insbesondere deswegen von Vorteil, weil die Einstellung der Ausbringmenge in den einzelnen Teilbreiten nicht vollkommen unabhängig erfolgen kann. Durch die zweimalige, überlappende Bearbeitung und die teilbreitenweise Berücksichtigung der Ausbringmenge können bei der zweiten Überfahrt Fehler oder Unzulänglichkeiten in der Einstellung der Ausbringmenge der ersten Überfahrt, verursacht beispielsweise durch wirkprinzipbedingte Abweichungen der applizierten Ausbringmenge durch den Schleuderstreuer, korrigiert werden.

Die eingangs genannte Aufgabe wird außerdem gelöst durch einen Schleuderstreuer zum Ausbringen eines Verteilguts auf einer landwirtschaftlichen Fläche, der insbesondere zur Ausführung des Verfahrens nach einem der Ansprüche 1 bis 8 geeignet ist. Schleuderstreuer weist wenigstens eine Ausbringvorrichtung auf, wobei die durch die wenigstens eine Ausbringvorrichtung abgedeckte Ausbringbreite in mehrere Teilbreiten unterteilbar ist und wobei die Ausbringmenge des Verteilguts für jede der Teilbreiten separat einstellbar ist und wobei Mittel zur Ermittlung der Ausbringmenge für jede der Teilbreiten vorgesehen sind. Dies bedeutet, dass eine Erfassung der Ausbringmenge in Abhängigkeit von der jeweiligen Teilbreite ermöglicht wird. Zudem ist vorgesehen, die teilbreitenweise erfasste Menge an Verteilgut bei nachfolgenden Ausbringvorgängen von Verteilgut auf der landwirtschaftlichen Fläche zu berücksichtigen. Weiter erfolgt dies zur teilbreitenweisen und/oder positionsabhängigen Berücksichtigung der Auswirkung der Ausbringmenge auf die Bodenbeschaffenheit. Der Schleuderstreuer ist erfindungsgemäß eingerichtet, dass bei wiederholtem Ausbringen eines Verteilguts auf der Fläche zur Düngung der Fläche mit teilweiser Überlappung der Streubereiche benachbarter Fahrspuren, die vorab erfassten Messwerte der Ausbringmenge bei der Düngung im Überlappungsbereich zumindest teilweise teilbreitenweise berücksichtigt werden. Vorzugsweise sind Mittel zum teilbreitenweisen positionsabhängigen und/oder zeitabhängigen Ermitteln der ausgebrachten Menge des Verteilguts vorgesehen. Vorzugsweise erfolgt die teilbreitenweise Erfassung positionsabhängig. Dies ist insbesondere erforderlich, um festzustellen, an welcher Position welche Menge ausgebracht wurde.

Weiter vorzugsweise erfolgt eine Ermittlung der eingestellten und/oder durch Messung tatsächlich ausgebrachten Menge an Verteilgut. Es kann sich um Mittel zur Berechnung der Menge, zur Erfassung der Menge und/oder zur Messung der Menge handeln. Beispielsweise kann die ausgebrachte Menge anhand der eingestellten Menge ermittelt werden. Auch kommt der Einsatz von Sensoren in Betracht, um die tatsächlich ausgebrachte Menge zu messen, zumindest mittelbar. So kann sichergestellt werden, dass die ausgebrachte Menge erfasst wird.

Es sind insbesondere Mittel zum Speichern der ermittelten Menge vorgesehen. Es handelt sich insbesondere um wenigstens einen Speicher, vorzugsweise Datenspeicher. Damit kann die ermittelte Menge gespeichert und die Applikation von eingestellten Sollapplikationsmengen des Verteilguts sichergestellt werden.

Ein bevorzugtes Ausführungsbeispiel der Erfindung wird im Folgenden anhand der Zeichnung näher beschrieben. In dieser zeigen:
- Fig. 1: ein Schleuderstreuer als Verteilmaschine für Dünger bei der Arbeit auf einer landwirtschaftlichen Fläche und
- Fig. 2: der Schleuderstreuer bei der Arbeit auf der landwirtschaftlichen Fläche.

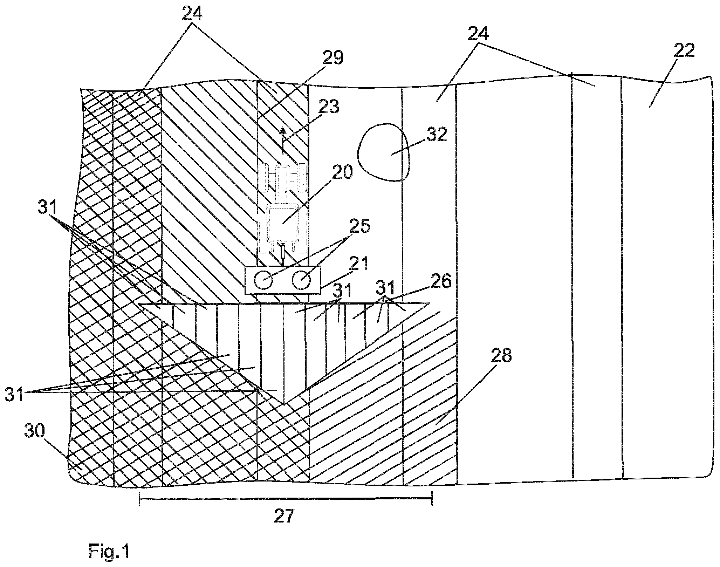

Ein an einen Schlepper 20 angekoppelter Schleuderstreuer 21 bei der Arbeit auf einer landwirtschaftlichen Fläche 22 ist in Fig. 1 dargestellt. Der Schleuderstreuer 21 wird in Fahrtrichtung 23 entlang von Fahrspuren 24 über die landwirtschaftliche Fläche bewegt. Der in einem nicht dargestellten Vorratsbehälter des Schleuderstreuers 21 bevorratete Dünger wird mittels Streuscheiben 25 in Breitverteilung auf der Fläche 22 ausgestreut. Die ausgebrachte Menge nimmt hierbei typischerweise von der Mitte der befahrenen Fahrspur 24 zu den Seiten hin ab, beispielsweise dreiecksförmig, wie an dem Schema 26 zu erkennen. Die Länge des Dreiecks in Fahrtrichtung ist hierbei an jeder Position quer zur Fahrtrichtung zumindest annähernd proportional zu der am jeweiligen Ort ausgebrachten Düngermenge. Die Streubreite 27 reicht von einer Fahrspur 24 zur übernächsten Fahrspur 24. Die Mengenverteilung 26 kann nach Bedarf auch in der Geometrie angepasst werden, beispielsweise eher trapezförmig ausgestaltet sein oder andere abweichende Geometrien aufweisen. Dies wird durch Anpassung der Streucharakteristik erreicht, indem die Einstellparameter des Schleuderstreuers, wie Drehzahl der Streuscheiben, ausgebrachte Menge und insbesondere Aufgabepunkt des Verteilgutes auf die Streuscheiben angepasst werden. Beispielsweise ist es möglich, durch Verlagerung des Aufgabepunktes ein späteres Verlassen des Düngers von der Streuscheibe zu erreichen, was bei Streuscheiben, die im hinteren Bereich des Schleuderstreuers von innen nach außen sich bewegen dazu führt, dass eine größere Menge Dünger im Außenbereich des Streubereiches ausgestreut wird.

Die bedingt durch das Wirkprinzip des Schleuderstreuers über die Streubreite 27 sehr inhomogene Mengenverteilung wird bei der Arbeit mit Schleuderstreuern typischerweise durch die Überlappung der Streubereiche benachbarter Fahrspuren 24 kompensiert. Da die Streubreite sich über zwei Fahrspurabstände erstreckt, wird jeder Bereich der landwirtschaftlichen Fläche 22 also zweimal mit Dünger bestreut. Die dreiecksförmige Mengenverteilung 26 im Zusammenspiel mit der Überlappung führt nun bei der Bearbeitung benachbarter Fahrspuren 24 dazu, dass letztlich an allen Orten im Idealfall dieselbe Menge an Dünger ausgebracht wird.

In der Fig. 1 bewegt sich der Schleuderstreuer auf der zweiten Fahrspur von links von unten nach oben in Fahrtrichtung 23 über die landwirtschaftliche Fläche. Die bei der Fahrt mit Dünger beaufschlagten Flächenteile sind durch eine Schraffur markiert. Die bei der Fahrt in Pfeilrichtung 23 im Bereich 28 beaufschlagten Flächenteile sind durch eine von links unten nach rechts oben verlaufende Schraffur dargestellt. Die bei Fahrt entgegen der Pfeilrichtung 23, beispielsweise entlang der linken Fahrspur 24, im Bereich 29 mit Dünger beaufschlagten Flächenteile sind demgegenüber mit einer Schraffur versehen, die von links oben nach rechts unten verläuft, so dass sich bei durch die Bearbeitung von benachbarten Fahrspuren zweifach beaufschlagten Flächenbereichen eine doppelte Schraffur wie im Bereich 30 ergibt. Diese Bereiche sind endgültig bearbeitet und weisen somit die gewünschte Menge an Dünger auf.

Um die Düngerverteilung innerhalb des Streubereiches optimal anpassen zu können, ist vorgesehen, den Streubereich in Teilbreiten 31 zu unterteilen. Die Ausbringmenge innerhalb dieser Teilbreiten 31 kann, in Grenzen, individuell angepasst werden, beispielsweise an die am jeweiligen Ort gewünschte Sollmenge, wie sie beispielsweise in einer Applikationskarte in einem Datenverarbeitungssystem des Schleppers 20, beispielsweise einem Terminal, oder auf einem Jobrechner des Schleuderstreuers 21 hinterlegt sein kann. Auf diese Weise kann je nach Bodenbeschaffenheit oder aufgrund von historischen Ertragskarten oder sonstigen Daten die Düngermenge am jeweiligen Ort zur Ertragsmaximierung optimal eingestellt werden. Auch können erfindungsgemäß zuvor teilbreitenweise aufgezeichnete Bearbeitungskarten, beispielsweise bei einem zuvor durchgeführten Bearbeitungsvorgang mit einem Schleuderstreuer, verwendet werden, um die Ausbringmenge der einzelnen Teilbreiten 31 innerhalb des Streubereichs individuell zu steuern. Die Steuerung der Ausbringmenge in den einzelnen Teilbreiten kann hierbei insbesondere durch eine Anpassung der Drehzahl der Streuscheiben 25, eine Anpassung der auf die Streuscheiben 25 aufgegebenen Düngermenge und die Einstellung des Aufgabepunktes des Düngers auf die Streuscheibe 25 erfolgen. Auch kann vorgesehen sein die Einstellung einer Grenzstreuvorrichtung anzupassen oder die Einstellung von konfigurierbaren Wurfschaufeln zu verändern, um die Ausbringmenge jeder Teilbreite 31 optimal zu steuern.

Zusätzlich ist insbesondere erfindungsgemäß Vorgesehen, bei der Bearbeitung einer landwirtschaftlichen Fläche mittels eines Schleuderstreuers 21 bei der wechselseitigen Überlappung der Streubereiche benachbarter Fahrspuren die Mengenverteilung 26 der benachbarten, zuvor bearbeiteten Fahrspuren teilbreitenaufgelöst zu berücksichtigen. So kann zu jedem Zeitpunkt die Ausbringmenge jeder Teilbreite 31 innerhalb der Mengenverteilung 26 derart eingestellt werden, dass die Überlappung mit der benachbarten, bereits bearbeiteten Fahrspur 24 optimal ist und überall die gewünschte Menge Dünger ausgebracht wird.

Insbesondere ist auch erfindungsgemäß vorgesehen, vorausschauend, die Mengenverteilung 26 derart einzustellen, dass die gewünschte Ausbringmenge an allen Orten optimal eingestellt wird. Beispielsweise kann innerhalb der Applikationskarte ein Bereich 32 vorgesehen sein, der mit einer signifikant größeren Menge an Dünger pro Fläche beaufschlagt werden soll, als der Rest der landwirtschaftlichen Fläche 22. Dieser Bereich 32 wird nun zunächst wie in Fig. 1 dargestellt entlang der zweiten Fahrspur von links in Pfeilrichtung 23 bearbeitet. Der Bereich 32 befindet sich hierbei im Außenbereich der Mengenverteilung bzw. des Streubereiches 26. Um nun den Bereich 32 mit einer größeren Menge Dünger pro Fläche zu beaufschlagen ist es notwendig, die Ausbringmenge in den äußeren Teilbreiten 31 auf der rechten Seite, welche den Bereich 32 überstreichen zu erhöhen. Eine Erhöhung der Aufwandmenge pro Fläche ist allerdings aufgrund des Wirkprinzips bei Schleuderstreuern in der Nähe des Zentrums einfacher möglich als im Randbereich der Mengenverteilung 26. So ist beispielsweise bekannt, dass eine Reduktion der Ausbringmenge im Randbereich sehr zuverlässig erreicht werden kann, insbesondere auch durch automatisch steuerbare Hilfsmittel, wie Grenzstreuvorrichtungen oder spezielle Wurfschaufeln. Eine Reduktion der Ausbringmenge im Zentrum der Mengenverteilung 26 im Vergleich zum Rand ist jedoch nicht beliebig möglich, insbesondere nicht einseitig, da sich die Streubereiche der Streuscheiben im Zentrum der Mengenverteilung 26 überlappen.

Eine gezielte Applikation der gewünschten, größeren Ausbringmenge im Bereich 32 ist daher erfindungsgemäß besonders effizient möglich, wenn bei der Bearbeitung des Bereichs 32 beide Bearbeitungsvorgänge des Bereichs 32, insbesondere von vornherein, berücksichtigt werden. So kann beispielsweise bei der ersten Überfahrt über den Bereich 32 in Fahrtrichtung 23 durch Verdrehen des Aufgabepunktes und leichtes Erhöhen der Ausbringmenge auf der in Fahrtrichtung gesehen rechten Seite eine etwas größere Ausbringmenge in den äußeren drei Teilbreiten 31 auf der rechten Seite generiert werden. Die am jeweiligen Ort applizierte Ausbringmenge wird hierbei ortsaufgelöst und teilbreitenweise gespeichert. Alternativ kann auch vorgesehen sein, die Ausbringmenge im Bereich 32 bei der ersten Überfahrt nicht anzupassen.

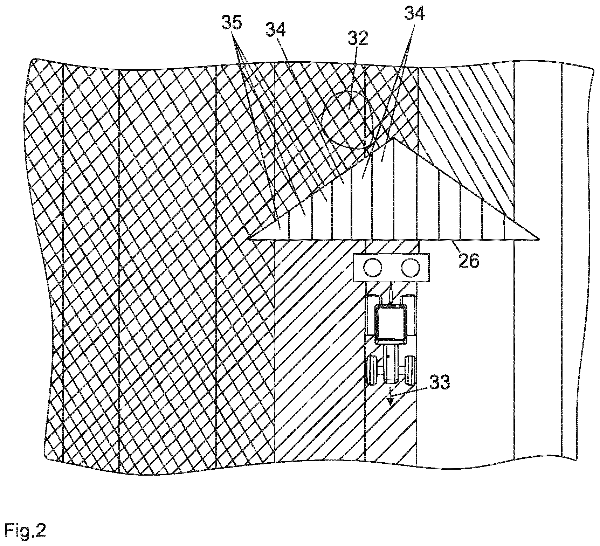

Bei der Fahrt in entgegengesetzter Richtung 33, wie in Fig. 2 dargestellt kann nun ebenfalls eine Anpassung der Ausbringmenge für den Bereich erhöhter Sollmenge 32 erfolgen. In diesem Fall ist dies sehr viel effektiver möglich, da der Bereich erhöhter Ausbringmenge sich näher am Zentrum des Schleuderstreuers im Bereich der Teilbreiten 34 befindet, wo wirkprinzipbedingt eine Erhöhung der Ausbringmenge im Vergleich zu den äußeren Teilbreiten 35 einfacher möglich ist. In jedem Fall wird erfindungsgemäß die bei der zuvor erfolgten Überfahrt ausgebrachte Düngermenge pro Teilbreite bei der aktuellen Einstellung der Ausbringmenge pro Teilbreite berücksichtigt, um an jedem Ort die gewünschte Ausbringmenge zu applizieren, also in diesem Fall die Ausbringmenge im Bereich 32 so weit wie notwendig zu erhöhen, um die gewünschte Ausbringmenge an allen Orten zu erreichen. Dies kann, wie im vorliegenden Beispiel insbesondere bedeuten, dass bei lokal unterschiedlichen Sollapplikationsmengen für die teilbreitenweise Einstellung des Schleuderstreuers von vornherein die zweifache überlappende Überfahrt berücksichtigt wird, da wirkprinzipbedingt bei einem Schleuderstreuer eine Reduktion der Ausbringmenge in den Teilbreiten am Rand des Streubereiches besser möglich ist bzw. entsprechend eine Erhöhung der Ausbringmenge im Zentrum in Vergleich zum Rand, als eine Vergrößerung der Ausbringmenge im Vergleich zum Zentrum des Streubereiches. Zumindest ist jedoch erfindungsgemäß vorgesehen, dass bei der überlappenden Bearbeitung mit einem Schleuderstreuer 21 die zuvor im Bereich des Streubereiches bereits ausgebrachte Düngermenge teilbreitenweise berücksichtigt wird, so dass in der Summe der Überfahrten über die landwirtschaftliche Fläche 22 die gewünschte Ausbringmenge an allen Orten appliziert wird.

Eine Anpassung der Applikationsrate bzw. der Verteilcharakteristik kann zum einen in Abhängigkeit von in einer Applikationskarte gespeicherten Sollausbringmengen erfolgen. Auch kann es notwendig sein, bei unregelmäßig geformten Flächen die Verteilcharakteristik anzupassen, beispielsweise im Bereich von Keilflächen oder bei der Einfahrt ins Vorgewende unter einem Winkel. Auch in diesen Fällen kann vorteilhaft eine verbesserte Ausbringung erfolgen, wenn die Einstellung des Schleuderstreuers anhand bereits gespeicherter teilbreitenweiser Daten der Ausbringmenge des aktuellen Ausbringvorganges erfolgt.

## Patentansprüche

1. Verfahren zum Ausbringen von Verteilgut auf einer landwirtschaftlichen Fläche (22) mittels eines Schleuderstreuers (21), wobei der Schleuderstreuer (21) wenigstens eine Ausbringvorrichtung (25) aufweist, wobei die durch die wenigstens eine Ausbringvorrichtung abgedeckte Ausbringbreite (27) in mehrere Teilbreiten (31) unterteilt wird und wobei die Ausbringmenge des Verteilguts für jede Teilbreite (31) des Schleuderstreuers (21) eingestellt wird, vorzugsweise separat, wobei die von dem Schleuderstreuer (21) ausgebrachte Menge an Verteilgut teilbreitenweise erfasst wird, **dadurch gekennzeichnet, dass** bei wiederholtem Ausbringen eines Verteilguts auf der Fläche (22) zur Düngung der Fläche mit teilweiser Überlappung der Streubereiche benachbarter Fahrspuren, die vorab erfassten Messwerte der Ausbringmenge bei der Düngung im Überlappungsbereich zumindest teilweise teilbreitenweise berücksichtigt werden.

2. Verfahren nach Anspruch 1, **dadurch gekennzeichnet, dass** die ausgebrachte Menge an Verteilgut positionsabhängig und/oder zeitabhängig erfasst wird.

3. Verfahren nach Anspruch 1 oder 2, **dadurch gekennzeichnet, dass** die tatsächliche Ausbringmenge anhand der eingestellten Ausbringmenge ermittelt und/oder gemessen wird, vorzugsweise anhand von Parametern des Schleuderstreuers (21) und/oder mittels wenigstens eines Sensors zur Messung der Ausbringmenge.

4. Verfahren nach Anspruch 3, **dadurch gekennzeichnet, dass** die Ermittlung und/oder Messung der Ausbringmenge teilbreitenweise erfolgt.

5. Verfahren nach einem der vorhergehenden Ansprüche, **dadurch gekennzeichnet, dass** die eingestellte und/oder tatsächliche Ausbringmenge gespeichert wird, vorzugsweise teilbreitenweise.

6. Verfahren nach einem der vorhergehenden Ansprüche, **dadurch gekennzeichnet, dass** die Speicherung an dem Schleuderstreuer (21) und/oder unabhängig von dem Schleuderstreuer (21) erfolgt, vorzugsweise am Zugfahrzeug (20) und/oder in einem externen beziehungsweise zentralen Speicher.

7. Verfahren nach einem der vorhergehenden Ansprüche, **dadurch gekennzeichnet, dass** ortsabhängig erfasste Ausbringmengen des Verteilguts gespeichert werden, vorzugsweise in einer Ortskarte erfasst werden.

8. Verfahren nach einem der vorhergehenden Ansprüche, **dadurch gekennzeichnet, dass** die teilbreitenweise erfasste Ausbringmenge berücksichtigt wird, vorzugsweise diejenige zumindest eines vorherigen Ausbringvorgangs, weiter vorzugsweise des unmittelbar vorangegangenen Ausbringvorgangs.

9. Schleuderstreuer (21) zum Ausbringen eines Verteilguts auf einer landwirtschaftlichen Fläche (22), insbesondere zur Ausführung des Verfahrens nach einem der Ansprüche 1 bis 8, mit wenigstens einer Ausbringvorrichtung, wobei die durch die wenigstens eine Ausbringvorrichtung abgedeckte Ausbringbreite (27) in mehrere Teilbreiten (31) unterteilbar ist, wobei die Ausbringmenge des Verteilguts für jede der Teilbreiten (31) separat einstellbar ist, wobei Mittel zur Ermittlung der Ausbringmenge für jede der Teilbreiten (31) vorgesehen sind und die teilbreitenweise erfasste Menge an Verteilgut zur teilbreitenweisen und/oder positionsabhängigen Berücksichtigung bei nachfolgenden Ausbringvorgängen von Verteilgut auf der landwirtschaftlichen Fläche (22) vorgesehen ist, **dadurch gekennzeichnet, dass** der Schleuderstreuer (21) eingerichtet ist, dass bei wiederholtem Ausbringen eines Verteilguts auf der Fläche (22) zur Düngung der Fläche mit teilweiser Überlappung der Streubereiche benachbarter Fahrspuren, die vorab erfassten Messwerte der Ausbringmenge bei der Düngung im Überlappungsbereich zumindest teilweise teilbreitenweise berücksichtigt werden.

10. Schleuderstreuer nach Anspruch 9, **dadurch gekennzeichnet, dass** Mittel zum teilbreitenweisen, positionsabhängigen und/oder zeitabhängigen Ermitteln der ausgebrachten Menge des Verteilguts vorgesehen sind.

11. Schleuderstreuer nach Anspruch 9 oder 10, **dadurch gekennzeichnet, dass** eine Ermittlung der eingestellten und/oder durch Messung tatsächlich ausgebrachten Menge an Verteilgut erfolgt.

12. Schleuderstreuer nach einem der Ansprüche 9 bis 11, **dadurch gekennzeichnet, dass** Mittel zum Speichern der ermittelten Menge vorgesehen sind, insbesondere wenigstens ein Speicher.

## Claims

1. Method for spreading material for distributing on an agricultural surface (22) by means of a centrifugal spreader (21), wherein the centrifugal spreader (21) has at least one spreading device (25), wherein the spreading width (27) covered by the at least one spreading device is divided into a plurality of partial widths (31), and wherein the spreading quantity of the material for distributing is set, preferably separately, for each partial width (31) of the centrifugal spreader (21), wherein the amount of material for distributing that is spread by the centrifugal spreader (21) is detected partial width by partial width, **characterized in that**, upon repeated spreading of a material for distributing over the surface (22) for fertilizing the surface with a partial overlapping of the scattering regions of adjacent tram lines, the previously detected measured values of the spreading quantity are at least partially taken into consideration partial width by partial width during the fertilizing in the overlapping region.

2. Method according to Claim 1, **characterized in that** the spread quantity of material for distributing is detected according to position and/or according to time.

3. Method according to Claim 1 or 2, **characterized in that** the actual spreading quantity is determined and/or measured with reference to the set spreading quantity, preferably with reference to parameters of the centrifugal spreader (21) and/or by means of at least one sensor for measuring the spreading quantity.

4. Method according to Claim 3, **characterized in that** the spreading quantity is determined and/or measured partial width by partial width.

5. Method according to one of the preceding claims, **characterized in that** the set and/or actual spreading quantity is stored, preferably partial width by partial width.

6. Method according to one of the preceding claims, **characterized in that** the storage is undertaken on the centrifugal spreader (21) and/or independently of the centrifugal spreader (21), preferably on the tractor (20) and/or in an external or central store.

7. Method according to one of the preceding claims, **characterized in that** spreading quantities of the material for distributing that are detected according to location are stored, and are preferably detected in a location map.

8. Method according to one of the preceding claims, **characterized in that** the spreading quantity detected partial width by partial width is taken into consideration, preferably the spreading quantity of at least one previous spreading operation, furthermore preferably of the immediately preceding spreading operation.

9. Centrifugal spreader (21) for spreading a material for distributing over an agricultural surface (22), in particular for carrying out the method according to one of Claims 1 to 8, with at least one spreading device, wherein the spreading width (27) covered by the at least one spreading device can be divided into a plurality of partial widths (31), wherein the spreading quantity of the material for distributing can be set separately for each of the partial widths (31), wherein means for determining the spreading quantity for each of the partial widths (31) are provided, and the amount of material for distributing that is detected partial width by partial width is provided for taking into consideration partial width by partial width and/or according to position during subsequent spreading operations of material for distributing over the agricultural surface (22), **characterized in that** the centrifugal spreader (21) is designed such that upon repeated spreading of a material for distributing over the surface (22) for fertilizing the surface with a partial overlapping of the scattering regions of adjacent tram lines, the previously detected measured values of the spreading quantity are at least partially taken into consideration partial width by partial width during the fertilizing in the overlapping region.

10. Centrifugal spreader according to Claim 9, **characterized in that** means for determining the spread quantity of material for distributing partial width by partial width, according to position and/or according to time are provided.

11. Centrifugal spreader according to Claim 9 or 10, **characterized in that** the quantity of material for distributing that is set and/or is actually spread owing to measurement is determined.

12. Centrifugal spreader according to one of Claims 9 to 11, **characterized in that** means for storing the determined quantity are provided, in particular at least one store.

## Revendications

1. Procédé d'épandage de produits à distribuer sur une surface agricole (22) au moyen d'un épandeur centrifuge (21), l'épandeur centrifuge (21) présentant au moins un dispositif d'épandage (25), la largeur d'épandage (27) couverte par ledit au moins un dispositif d'épandage étant divisée en plusieurs largeurs partielles (31), et la quantité d'épandage des produits à distribuer étant réglée, de préférence séparément, pour chaque largeur partielle (31) de l'épandeur centrifuge (21), la quantité de produits à distribuer épandue par l'épandeur centrifuge (21) étant détectée par largeur partielle, **caractérisé en ce qu'**en cas d'épandage répété des produits à distribuer sur la surface (22) pour épandre de l'engrais sur la surface avec un chevauchement partiel des zones d'épandage d'ornières voisines, les valeurs mesurées, détectées préalablement, de la quantité d'épandage sont prises en compte au moins partiellement par largeur partielle lors de l'épandage d'engrais dans la zone de chevauchement.

2. Procédé selon la revendication 1, **caractérisé en ce que** la quantité d'épandage de produits à distribuer est détectée en fonction de la position et/ou en fonction du temps.

3. Procédé selon la revendication 1 ou 2, **caractérisé en ce que** la quantité d'épandage réelle est déterminée et/ou mesurée à l'aide de la quantité d'épandage réglée, de préférence à l'aide de paramètres de l'épandeur centrifuge (21) et/ou au moyen d'au moins un capteur pour mesurer la quantité d'épandage.

4. Procédé selon la revendication 3, **caractérisé en ce que** la détermination et/ou la mesure de la quantité d'épandage sont effectuées par largeur partielle.

5. Procédé selon l'une quelconque des revendications précédentes, **caractérisé en ce que** la quantité d'épandage réglée et/ou réelle est stockée, de préférence par largeur partielle.

6. Procédé selon l'une quelconque des revendications précédentes, **caractérisé en ce que** le stockage est effectué au niveau de l'épandeur centrifuge (21) et/ou indépendamment de l'épandeur centrifuge (21), de préférence au niveau du tracteur (20) et/ou dans une mémoire externe ou centrale.

7. Procédé selon l'une quelconque des revendications précédentes, **caractérisé en ce que** des quantités d'épandage détectées en fonction de l'emplacement des produits à distribuer sont stockées, de préférence enregistrées sur une carte locale.

8. Procédé selon l'une quelconque des revendications précédentes, **caractérisé en ce que** la quantité d'épandage détectée par largeur partielle est prise en compte, de préférence celle d'au moins une opération d'épandage antérieure, encore plus préférablement de l'opération d'épandage immédiatement précédente.

9. Epandeur centrifuge (21) permettant d'épandre des produits à distribuer sur une surface agricole (22), en particulier d'effectuer le procédé selon l'une quelconque des revendications 1 à 8, comprenant au moins un dispositif d'épandage, la largeur d'épandage (27) couverte par ledit au moins un dispositif d'épandage étant divisée en plusieurs largeurs partielles (31), et la quantité d'épandage des produits à distribuer pouvant être réglée séparément pour chacune des largeurs partielles (31), dans lequel des moyens pour déterminer la quantité d'épandage pour chacune des largeurs partielles (31) sont prévus et la quantité de produits à distribuer, détectée par largeur partielle, est prévue pour la prise en compte par largeur partielle et/ou en fonction de la position lors des opérations d'épandage consécutives des produits à distribuer sur la surface agricole (22), **caractérisé en ce que** l'épandeur centrifuge (21) est aménagé de telle sorte qu'en cas d'épandage répété des produits à distribuer sur la surface (22) pour épandre de l'engrais sur la surface avec un chevauchement partiel des zones d'épandage d'ornières voisines, les valeurs mesurées, détectées préalablement, de la quantité d'épandage sont prises en compte au moins partiellement par largeur partielle lors de l'épandage d'engrais dans la zone de chevauchement.

10. Epandeur centrifuge selon la revendication 9, **caractérisé en ce que** des moyens sont prévus pour déterminer la quantité épandue des produits à distribuer par largeur partielle, en fonction de la position et/ou en fonction du temps.

11. Epandeur centrifuge selon la revendication 9 ou 10, **caractérisé en ce qu'**une détermination de la quantité de produits à distribuer réglée et/ou réellement épandue comme mesurée est effectuée.

12. Epandeur centrifuge selon l'une quelconque des revendications 9 à 11, **caractérisé en ce que** des moyens pour stocker la quantité déterminée, en particulier au moins une mémoire, sont prévus.
